# EUROPÄISCHE PATENTSCHRIFT

(11) **EP 0 784 593 B1**
(45) Veröffentlichungstag und Bekanntmachung des Hinweises auf die Patenterteilung: **16.06.1999**
(21) Anmeldenummer: 95934637.0
(22) Anmeldetag: 23.09.1995
(51) Int. Cl.: C01B 21/14

(54) **VERFAHREN ZUR HERSTELLUNG VON HYDROXYLAMINEN AUS AMMONIAK ODER DEN ENTSPRECHENDEN AMINEN, WASSERSTOFF UND SAUERSTOFF**
METHOD OF PRODUCING HYDROXYLAMINES FROM AMMONIA OR THE ASSOCIATED AMINES, HYDROGEN AND OXYGEN
PROCEDE DE FABRICATION D'HYDROXYLAMINES A PARTIR D'AMMONIAC OU DES AMINES EQUIVALENTES, D'HYDROGENE ET D'OXYGENE

(30) Priorität: 04.10.1994 DE 4435239
(43) Veröffentlichungstag der Anmeldung: 23.07.1997
(73) Patentinhaber: BASF AKTIENGESELLSCHAFT, 67056 Ludwigshafen (DE)
(72) Erfinder: MÜLLER, Ulrich, D-67434 Neustadt (DE); HEINEKE, Daniel, D-67065 Ludwigshafen (DE)
(86) Internationale Anmeldenummer: EP9503771
(87) Internationale Veröffentlichungsnummer: WO9610535

(56) Entgegenhaltungen:
- EP-A- 0 325 053
- EP-A- 0 326 759
- EP-A- 0 469 662
- EP-A- 0 522 634

## Beschreibung

Die vorliegende Erfindung betrifft ein verbessertes Verfahren zur Herstellung von Hydroxylaminen aus Ammoniak oder den entsprechenden Aminen, Wasserstoff und Sauerstoff unter Verwendung eines bestimmten Oxidationskatalysators.

Für die Herstellung von Hydroxylamin ausgehend von Ammoniak kennt man mehrstufige technische Verfahren. Nachteilig bei diesen Verfahren ist, daß sie das entstehende Hydroxylamin in Form von Ammoniumsalzen binden, die im späteren Verlauf, beispielsweise bei der Verwendung in Verfahren zur Herstellung von Caprolactam, zu erheblichem Zwangsanfall von Ammonsulfat-Salzen führen.

Ein salzfreies Verfahren auf der Basis von Ammoniak und Wasserstoffperoxid beschreibt die EP-A 522 634, durch den Einsatz von teurem Wasserstoffperoxid ist dieses Verfahren jedoch nicht wirtschaftlich.

Aufgabe der vorliegenden Erfindung war es, einen einfach herzustellenden und effizient wirkenden Oxidationskatalysator für die Herstellung von Hydroxylaminen aus Ammoniak oder den entsprechenden Aminen und ein entsprechendes Verfahren bereitzustellen, das die Nachteile des Standes der Technik nicht mehr aufweist und Hydroxylamine salzfrei aus Ammoniak oder den entsprechenden Aminen, Wasserstoff und Sauerstoff erzeugen kann.

Demgemäß wurde ein Verfahren zur Herstellung von Hydroxylaminen aus Ammoniak oder den entsprechenden Aminen, Wasserstoff und Sauerstoff gefunden, welches dadurch gekennzeichnet ist, daß man die Einsatzstoffe in einer Stufe heterogenkatalytisch unter Verwendung eines Oxidationskatalysators auf Basis von Titan- oder Vanadiumsilikaliten mit Zeolith-Struktur mit einem Gehalt von 0,01 bis 20 Gew.-% an einem oder mehreren Platinmetallen aus der Gruppe Ruthenium, Rhodium, Palladium, Osmium, Iridium und Platin, wobei die Platinmetalle jeweils in mindestens zwei verschiedenen Bindungsenergiezuständen vorliegen, umsetzt.

Derartige Oxidationskatalysatoren sind aus der DE-A 44 25 672 bekannt.

In der EP-A 469 662 werden mit Edelmetallösungen imprägnierte und anschließend kalzinierte Titansilikalit-Katalysatoren beschrieben, welche zur Oxidation von Paraffinen empfohlen werden. Die Edelmetalle (Platinmetalle) liegen teilweise in oxidierter Form und teilweise als reduziertes Metall vor.

Im Sinne der Erfindung ist es von entscheidender Bedeutung, daß der Oxidationskatalysator vor seinem Einsatz die Platinmetalle in der genannten speziellen Modifikation der Mischung aus verschiedenen Bindungsenergiezuständen enthält. Die verschiedenen Bindungsenergiezustände entsprechen formell verschiedenen Oxidationsstufen der Metalle. In einer bevorzugten Ausführungsform liegen zwei, drei, vier oder fünf verschiedene Bindungsenergiezustände vor.

Beim Vorliegen von zwei verschiedenen Bindungsenergiezuständen kann dies beispielsweise eine Mischung aus Species der Oxidationsstufe 0 und +1, 0 und +2, 0 und +3 oder 0 und +4 sein. Die beiden Species liegen normalerweise im Verhältnis von 5:95 bis 95:5, insbesondere 10:90 bis 90:10 vor.

Beim Vorliegen von drei verschiedenen Bindungsenergiezuständen kann dies beispielsweise eine Mischung aus Species der Oxidationsstufe 0, +1 und +2 oder 0, +2 und +3 oder 0, +2 und +4 oder 0, +1 und +3 oder 0, +1 und +4 oder 0, +3 und +4 sein. Die drei Species liegen normalerweise im Verhältnis von (0,05-20):(0,05-20):1, insbesondere (0,1-10):(0,1-10):1 vor.

Es können weiterhin auch Mischungen aus vier oder mehr verschiedenen Oxidationsstufen vorliegen, beispielsweise aus 0, +1, +2 und +3 oder 0, +1, +2 und +4 oder 0, +2, +3 und +4 oder 0, +1, +3 und +4 oder 0, +1, +2, +3 und +4. Die Species liegen hierbei in ähnlichen Gewichtsverhältnissen zueinander wie bei den Mischungen aus 2 oder 3 verschiedenen Oxidationsstufen vor.

Unter den Platinmetallen wird Palladium bevorzugt. In einer besonders bevorzugten Ausführungsform liegt das Palladium in zwei oder drei verschiedenen Bindungsenergiezuständen vor.

Die Bindungsenergiezustände an der Oberfläche des Katalysators können am einfachsten durch Röntgenphotoelektronenspektroskopie (XPS) charakterisiert werden. So liegen bei einer typischen Mischung von drei Palladiumspecies die entsprechenden Werte für die Energien des Pd-3d_{5/2}-Zustandes bei 335,0-335,4 eV, 336-336,6 eV und 337,1-337,9 eV, was formell den Oxidationsstufen Pd^{o}, Pd¹⁺ und Pd²⁺ entspricht.

Bei den beschriebenen Oxidationskatalysatoren ist es besonders vorteilhaft, die Platinmetalle derart aufzubringen, daß keine Metall-Metall-Bindungen wirksam werden und Metall-Zeolith-Bindungen überwiegen. Insbesondere aus Untersuchungen der Röntgenfeinstruktur (EXAFS) geht hervor, daß es beim Vorliegen von Palladium wesentlich ist, daß nahezu ausschließlich Palladium-Sauerstoff-Bindungsabstände von 2,02±0,02 Å auftreten und Palladium-Palladium-Abstände wie bei ausgedehntem Palladium-Metall oder Palladium-Agglomeraten von 2,74±0,02 Å sowie Palladium-Palladium-Abstände von 3,04±0,02 Å wie in Palladium(II)-oxid vermieden werden.

Die Basis für den beschriebenen Oxidationskatalysator bilden bekannte Titan- oder Vanadiumsilikalite mit Zeolith-Struktur, vorzugsweise mit Pentasil-Zeolith-Struktur, insbesondere die Typen mit röntgenographischer Zuordnung zur MFI-, MEL- oder MFI/MEL-Mischstruktur. Zeolithe dieses Typs sind beispielsweise in W.M.Meier und D.H.Olson, "Atlas of Zeolithe Structure Types", Butterworths, 2nd Ed., 1987, beschrieben. Denkbar sind weiterhin titanhaltige Zeolithe mit der Struktur des ZSM-48, Ferrierit oder β-Zeolith.

Im beschriebenen Oxidationskatalysator kann das Titan des Silikalits teilweise oder vollständig durch Vanadium ersetzt sein. Das molare Verhältnis von Titan und/oder Vanadium zur Summe aus Silicium plus Titan und/oder Vanadium liegt in der Regel im Bereich von 0,01:1 bis 0,1:1.

Der Gehalt an den genannten Platinmetallen im beschriebenen Oxidationskatalysator beträgt 0,01 bis 20 Gew.-%, vorzugsweise 0,1 bis 10 Gew.-%, insbesondere 0,2 bis 5 Gew.-%, bezogen auf die Gesamtmasse des Oxidationskatalysators.

Außer mit den genannten Platinmetallen kann der beschriebene Oxidationskatalysator noch zusätzlich mit einem oder mehreren Elementen aus der Gruppe Eisen, Kobalt, Nickel, Rhenium, Silber und Gold modifiziert sein. Diese Elemente sind dann üblicherweise in einer Menge von 0,01 bis 10 Gew.-%, insbesondere 0,05 bis 5 Gew.-%, bezogen auf die Gesamtmasse des Oxidationskatalysators, enthalten.

Der beschriebene Oxidationskatalysator wird zweckmäßigerweise durch Imprägnieren oder Umsetzen von Titan- oder Vanadiumsilikaliten mit Zeolith-Struktur mit Salzlösungen, Chelatkomplexen oder Carbonylkomplexen der Platinmetalle hergestellt, wobei diese Herstellweise dadurch gekennzeichnet ist, daß man im Anschluß an die Imprägnierung bzw. Umsetzung durch geeignete reduzierende oder oxidierende Bedingungen die erforderliche Verteilung der Bindungsenergiezustände der Platinmetalle einstellt.

So kann das Aufbringen der Platinmetalle beispielsweise durch Imprägnieren mit einer Platinmetallsalzlösung, insbesondere in der Oxidationsstufe +2 bis +4, aus rein wäßriger, rein alkoholischer oder wäßrig-alkoholischer Mischung bei Temperaturen von 20 bis 90°C, insbesondere 30 bis 55°C, erfolgen. Als Salze können dabei z.B. die entsprechenden Chloride, Acetate oder deren Tetramin-Komplexe eingesetzt werden, im Fall von Palladium sollen hier Palladium(II)-chlorid, Palladium(II)-acetat und der Palladium(II)-tetraminchloro-Komplex genannt werden. Hierbei ist die Menge der Metallsalze so zu wählen, daß auf dem resultierenden Oxidationskatalysator Konzentrationen von 0,01 bis 20 Gew.-% an Platinmetall erzielt werden.

Ebenso kommt hier die Umsetzung mit entsprechenden Chelatkomplexen der Platinmetalle in unpolaren Lösungsmitteln in Betracht, etwa mit Acetylacetonaten, Acetonylacetonaten oder Phosphinkomplexen.

Auch das Aufbringen in Form von entsprechenden Carbonylkomplexen der Platinmetalle ist möglich. Hierbei arbeitet man zweckmäßigerweise in der Gasphase unter erhöhtem Druck oder imprägniert mit diesen Carbonylkomplexen in überkritischen Lösungsmitteln wie CO₂.

Nach gegebenenfalls erforderlicher Trocknung und/oder gegebenenfalls einem Brennschritt der so erhaltenen Katalysatorvorstufe wird die Verteilung der Bindungsenergiezustände vorzugsweise durch partielle Reduktion vorliegender höherer Oxidationsstufen der Platinmetalle, insbesondere durch Hydrierung in einer Wasserstoffatmosphäre, eingestellt. Liegen die Platinmetalle bereits in der Oxidationsstufe 0 vor, so beim Aufbringen als Carbonylkomplexe, muß partiell oxidiert werden.

In einer bevorzugten Ausführungsform wird der beschriebene Oxidationskatalysator mit Salzlösungen der Platinmetalle in der Oxidationsstufe +2 bis +4 imprägniert und anschließend der getrocknete Katalysator in einer Wasserstoffatmosphäre hydriert, wobei diese Herstellweise dadurch gekennzeichnet ist, daß man die Hydrierung bei Temperaturen von 20 bis 120°C, insbesondere 25 bis 100°C, vor allem 30 bis 70°C, durchführt.

Wird bei dieser partiellen Reduktion durch Hydrierung in einer Wasserstoffatmosphäre die Temperatur zu hoch gewählt, liegen die Platinmetalle nahezu ausschließlich in der Oxidationsstufe 0, d.h. als Metalle, und in Form größerer Agglomerate vor, was im mikroskopischen Bild am Auftreten von Metall-Clustern mit Größen über 1,0 nm erkennbar ist.

Die vorgenannten Titan- oder Vanadiumsilikalite mit Zeolith-Struktur, insbesondere hierbei solche mit MFI-Pentasil-Zeolith-Struktur, werden in der Regel hergestellt, indem man ein Synthesegel, bestehend aus Wasser, einer Titan- bzw. Vanadiumquelle und Siliciumdioxid in geeigneter Weise unter Zusatz von organischen stickstoffhaltigen Verbindungen ("Schablonen-Verbindungen") unter hydrothermalen Bedingungen und gegebenenfalls unter Zusatz von Ammoniak, Alkali oder Fluorid als Mineralisatoren kristallisiert. Als organische stickstoffhaltige Verbindungen kommen beispielsweise 1,6-Diaminohexan oder Salze oder das freie Hydroxid von Tetraalkylammonium, speziell von Tetrapropylammonium, in Betracht.

Bei der Herstellung der Titan- bzw. Vanadiumsilikalite muß eine Verunreinigung mit größeren Mengen an Alkali- oder Erdalkalimetallverbindungen vermieden werden; Alkaligehalte (insbesondere an Natrium oder Kalium) < 100 ppm sind erstrebenswert, um später einen ausreichend aktiven Oxidationskatalysator zu erhalten.

Die Kristallisation der phasenreinen Struktur des Titan- bzw. Vanadiumsilikalits erfolgt vorzugsweise bei Temperaturen von 140 bis 190°C, insbesondere 160 bis 180°C, innerhalb einer Zeitdauer von 2 bis 7 Tagen, wobei bereits nach ca. 4 Tagen gut kristallines Produkt erhalten wird. Durch starkes Rühren und einen hohen pH-Wert von 12 bis 14 während der Kristallisation kann die Synthesedauer einerseits und die Kristallitgröße andererseits deutlich verringert werden.

Von Vorteil sind beispielsweise Primärkristallite von 0,05 bis 0,5 µm, insbesondere aber solche mit Größen von weniger als 0,2 µm im mittleren Partikeldurchmesser.

Nach der Kristallisation kann der Titan- bzw. Vanadiumsilkalit nach an sich bekannten Methoden abfiltriert, gewaschen und bei 100 bis 120°C getrocknet werden.

Zur Entfernung der in den Poren noch vorliegenden Amin- oder Tetraalkylammoniumverbindungen kann das Material noch einer thermischen Behandlung an Luft oder unter Stickstoff unterzogen werden. Dabei ist es vorteilhaft, das Abbrennen des Templates unter Bedingungen vorzunehmen, die den Temperaturanstieg auf Werte < 550°C begrenzen.

Zur Modifizierung des beschriebenen Oxidationskatalysators können außer den schon genannten Zusätzen von Platinmetallen und sonstigen Elementen die nach dem derzeitigen Stand der Technik bekannten Methoden der Verformung unter Zuhilfenahme eines Binders, des Ionenaustausches oder der Oberflächenmodifizierung, beispielsweise über chemical vapor deposition (CVD) oder chemische Derivatisierung wie etwa Silylierung, zum Einsatz gelangen.

Das vorliegen der für eine Oxidationsreaktion benötigten Katalysatorfunktionen kann durch IR-Spektroskopie geprüft werden: bei 550 cm⁻¹ und bei 960 cm⁻¹ treten signifikante Banden auf, die das Vorliegen der erwünschten Festkörper-Kristallinität sowie der benötigten Oxidationsaktivität anzeigen.

Eine Regenerierung des beschriebenen Oxidationskatalysators ist ebenfalls in einfacher Weise möglich. Desaktivierte Katalysatoren können durch kontrolliertes Abbrennen und nachfolgende Reduktion mit beispielsweise Wasserstoff wieder in eine aktive Form zurückgeführt werden.

Bei geringer Belegung kann der Katalysator auch durch einen einfachen Waschprozeß wieder regeneriert werden. Je nach Bedarf kann der Waschvorgang im neutralen, sauren oder basischen pH-Bereich durchgeführt werden. Gegebenenfalls kann auch mittels einer mineralsauren Wasserstoffperoxidlösung die Katalysatoraktivität wieder regeneriert werden.

Der beschriebene Oxidationskatalysator eignet sich insbesondere zur Herstellung von unsubstituiertem Hydroxylamin, daneben aber auch zur Herstellung von substituierten Hydroxylaminen aus den entsprechenden Aminen, Wasserstoff und Sauerstoff, z.B. aus cyclischen oder aliphatischen Aminen wie Cyclohexylamin, welche unter den Reaktionsbedingungen teilweise zu den entsprechenden Lactamen weiterreagieren können.

Die erfindungsgemäße Umsetzung kann in flüssiger Phase, in der Gasphase oder auch in überkritischer Phase durchgeführt werden. Dabei wird der Katalysator bei Flüssigkeiten vorzugsweise als Suspension eingesetzt, während bei Gasphasen- oder überkritischer Fahrweise eine Festbettanordnung von Vorteil ist.

Werden Hydroxylamine in flüssiger Phase hergestellt, arbeitet man vorteilhafterweise bei einem Druck von 1 bis 100 bar und in einer Suspensionsfahrweise in Gegenwart von Lösungsmitteln. Als Lösungsmittel eignen sich Alkohole, z.B. Methanol, Ethanol, iso-Propanol oder tert.-Butanol oder Mischungen hieraus und insbesondere Wasser. Man kann auch Mischungen der genannten Alkohole mit Wasser einsetzen. In bestimmten Fällen bewirkt die Verwendung von Wasser oder wasserhaltigen Lösungsmittelsystemen eine deutliche Selektivitätssteigerung des gewünschten Epoxids gegenüber den reinen Alkoholen als Lösungsmittel.

Die erfindungsgemäße Umsetzung wird in der Regel bei Temperaturen von -5 bis 70°C, insbesondere 20 bis 50°C, vorgenommen. Das Molverhältnis von Wasserstoff zu Sauerstoff kann üblicherweise im Bereich H₂:O₂ = 1:10 bis 1:1 variiert werden und ist besonders günstig bei 1:2,5 bis 1:1. Das molare Verhältnis von Sauerstoff zum Ammoniak liegt in der Regel bei 1:1 bis 1:3, vorzugsweise 1:1,5 bis 1:1,7. Als Trägergas kann ein beliebiges Inertgas zugefahren werden, insbesondere eignet sich Stickstoff.

Die nachfolgenden Beispiele sollen die Erfindung näher beschreiben, ohne daß jedoch dadurch eine Einschränkung zu verstehen wäre.

### Beispiel 1

Dieses Beispiel beschreibt die Kristallisation eines Titansilikalits.

Dazu wurden in einem Vierhalbskolben (2 l Inhalt) 455 g Tetraethylorthosilikat vorgelegt und aus einem Tropftrichter innerhalb von 30 min mit 15 g Tetraisopropylorthotitanat unter Rühren (250 U/min, Blattrührer) versetzt. Es bildete sich eine farblose, klare Mischung. Abschließend versetzte man mit 800 g einer 20 gew.-%igen wäßrigen Tetrapropylammoniumhydroxid-Lösung (Alkaligehalt <10 ppm) und rührte noch eine Stunde nach. Bei 90°C bis 100°C wurde das durch Hydrolyse gebildete Alkoholgemisch (ca. 450 g) abdestilliert. Man füllte mit 1,5 l deionisiertem Wasser auf und gab das mittlerweile leicht opaque Sol in einen 2,5 l-fassenden Rührautoklaven. Mit einer Heizrate von 3°C/min wurde der verschlossene Autoklav (Ankerrührer, 200 U/min) auf eine Reaktionstemperatur von 175°C gebracht. Nach 92 Stunden wurde die Reaktion beendet. Das erkaltete Reaktionsgemisch (weiße Suspension) wurde abzentrifugiert und mehrfach mit Wasser neutralgewaschen. Der erhaltene Feststoff wurde bei 110°C innerhalb von 24 Stunden getrocknet (Auswaage 149 g). Abschließend wurde unter Luft bei 500°C in 5 Stunden das im Zeolithen noch vorhandene Templat abgebrannt (Kalzinierungsverlust: 14 Gew.-%).

Das reinweiße Produkt hatte nach naßchemischer Analyse einen Ti-Gehalt von 1,5 Gew.-% und einen Restgehalt an Alkali (Kalium) unterhalb von 0,01 Gew.-%. Die Ausbeute (auf eingesetztes SiO₂ gerechnet) betrug 97 %. Die Kristallitgröße lag bei ca. 0,1-0,15 µm und das Produkt zeigte im IR typische Banden bei 960 cm⁻¹ und 550 cm⁻¹.

### Beispiel 2

Zur Imprägnierung mit Palladium wurde zunächst mit 0,515 g Palladium(II)-chlorid und 120 g Ammoniaklösung (25 Gew.-% in Wasser) unter Rühren bei Raumtemperatur eine fleischfarbene Lösung hergestellt. In einem Rundkolben wurden 60 g des frisch hergestellten Titansilikalits aus Beispiel 1 in 130 g deionisiertem Wasser suspendiert. Dazu gab man die Gesamtmenge der vorbereiteten Pd-Tetraminchloro-Komplexlösung und rührte für den Verlauf einer Stunde im Rotationsverdampfer bei Raumtemperatur unter Normaldruck. Abschließend wurde die Suspension bei 90-100°C unter Vakuum (5 mbar) eingedampft. Das weiße Produkt wurde direkt zur Reduktion weiterverwendet.

In einem Labordrehrohrofen (Quarzglas, Durchmesser 5 cm, Länge in der Heizzone 20 cm) wurden 20 g des Pd-imprägnierten Produktes innerhalb von 90 Min bei einer Temperatur von 50°C mit einer Gasmischung aus 20 l/h Stickstoff und 1 l/h Wasserstoff bei einer Drehzahl des Ofens von 50 U/min reduziert.

Das fertige Produkt war von heller Farbe und zeigte mittels transmissionselektronenmikroskopischer (TEM)-Analyse keine metallischen Palladium-Cluster mit Größen über 1,0 nm. Der Palladiumgehalt wurde naßchemisch zu 0,49 Gew.-% bestimmt. Mittels XPS fand man die drei vorn genannten Bindungsenergiezustände des Pd-3d_{5/2}-Photoelektrons (formell entsprechend den Oxidationsstufen +2, +1 und 0).

EXAFS-Messungen an dieser Probe zeigten ein Signal für Pd-O- oder Pd-N-Bindungsabstände von 2,02+0,02 Å. Pd-Pd-Bindungsabstände von 2,74±0,02 Å oder 3,04±0,02 Å wurden nicht beobachtet.

### Beispiel 3

Dieses Beispiel erläutert die einstufige Herstellung von Hydroxylamin aus Ammoniak, Wasserstoff und Sauerstoff an dem nach Beispiel 1 und 2 hergestellten Katalysator in wäßriger Lösung.

In einen Stahldruckreaktor (Volumen 0,375 l) wurden 2 g Katalysator (aus Beispiel 2) mit 150 ml destilliertem Wasser und 2,4 g Ammoniaklösung (25 Gew.-% in Wasser) vorgelegt. In den verschlossenen Reaktor wurden sodann 20 bar Sauerstoff und 20 bar Wasserstoff aufgepreßt.

## Patentansprüche

1. Verfahren zur Herstellung von Hydroxylaminen aus Ammoniak oder den entsprechenden Aminen, Wasserstoff und Sauerstoff, dadurch gekennzeichnet, daß man die Einsatzstoffe in einer Stufe heterogenkatalytisch unter Verwendung eines Oxidationskatalysators auf Basis von Titan- oder Vanadiumsilikaliten mit Zeolith-Struktur und einem Gehalt von 0,01 bis 20 Gew.-% an einem oder mehreren Platinmetallen aus der Gruppe Ruthenium, Rhodium, Palladium, Osmium, Iridium und Platin, wobei die Platinmetalle jeweils in mindestens zwei verschiedenen Bindungsenergiezuständen vorliegen, umsetzt.

2. Verfahren nach Anspruch 1, dadurch gekennzeichnet, daß man einen Oxidationskatalysator mit einem Gehalt von 0,01 bis 20 Gew.-% Palladium, wobei das Palladium in zwei oder drei verschiedenen Bindungsenergiezuständen vorliegt, einsetzt.

3. Verfahren nach Anspruch 1 oder 2, dadurch gekennzeichnet, daß man einen Oxidationskatalysator mit einem zusätzlichen Gehalt an einem oder mehreren Elementen aus der Gruppe Eisen, Kobalt, Nickel, Rhenium, Silber und Gold einsetzt.

4. Verfahren nach den Ansprüchen 1 bis 3, dadurch gekennzeichnet, daß man einen Oxidationskatalysator mit einem molaren Verhältnis von Titan und/oder Vanadium zur Summe aus Silicium plus Titan und/oder Vanadium von 0,01:1 bis 0,1:1 einsetzt.

5. Verfahren nach den Ansprüchen 1 bis 4, dadurch gekennzeichnet, daß man einen Oxidationskatalysator einsetzt, welcher durch Imprägnieren oder Umsetzen von Titan- oder Vanadiumsilikaliten mit Zeolith-Struktur mit Salzlösungen, Chelatkomplexen oder Carbonylkomplexen der Platinmetalle und anschließendes Einstellen der erforderlichen Verteilung der Bindungsenergiezustände der Platinmetalle durch geeignete reduzierende oder oxidierende Bedingungen hergestellt wurde.

6. Verfahren nach Anspruch 5, dadurch gekennzeichnet, daß man einen Oxidationskatalysator einsetzt, welcher durch Imprägnieren mit Salzlösungen der Platinmetalle in der Oxidationsstufe +2 bis +4 und anschließende Hydrierung des getrockneten Katalysators in einer Wasserstoffatmosphäre bei Temperaturen von 20 bis 120°C hergestellt wurde.

7. Verfahren nach den Ansprüchen 1 bis 6, dadurch gekennzeichnet, daß man die Umsetzung in Gegenwart von Wasser durchführt.

## Claims

1. A process for the preparation of hydroxylamines from ammonia or the corresponding amines, hydrogen and oxygen, wherein the starting materials are reacted in one stage under heterogeneous catalysis using an oxidation catalyst based on a titanium or vanadium silicalite having a zeolite structure and containing from 0.01 to 20 % by weight of one or more platinum metals selected from the group consisting of ruthenium, rhodium, palladium, osmium, iridium and platinum, the platinum metals each being present in at least two different bond energy states.

2. A process as claimed in claim 1, wherein an oxidation catalyst containing from 0.01 to 20 % by weight of palladium is used, the palladium being present in two or three different bond energy states.

3. A process as claimed in claim 1 or 2, wherein an oxidation catalyst additionally containing one or more elements selected from the group consisting of iron, cobalt, nickel, rhenium, silver and gold is used.

4. A process as claimed in any of claims 1 to 3, wherein an oxidation catalyst having a molar ratio of titanium or vanadium to the sum of silicon plus titanium or vanadium of from 0.01:1 to 0.1:1 is used.

5. A process as claimed in any of claims 1 to 4, wherein the oxidation catalyst used was prepared by impregnating or reacting a titanium or vanadium silicalite having a zeolite structure with salt solutions, chelate complexes or carbonyl complexes of the platinum metals and then establishing the required distribution of the bond energy states of the platinum metals by suitable reducing or oxidizing conditions.

6. A process as claimed in claim 5, wherein the oxidation catalyst used was prepared by impregnation with salt solutions of the platinum metals in the oxidation states +2 to +4 and subsequent hydrogenation of the dried catalyst in a hydrogen atmosphere at from 20 to 120°C.

7. A process as claimed in any of claims 1 to 6, wherein the reaction is carried out in the presence of water.

## Revendications

1. Procédé de préparation d'hydroxylamines à partir d'ammoniac ou des amines correspondantes, d'hydrogène et d'oxygène, caractérisé en ce que l'on fait réagir les matières de départ en une étape catalysée de façon hétérogène, en utilisant un catalyseur d'oxydation à base de silicalites de vanadium ou de titane à structure zéolithe et ayant une teneur de 0,01-20% en poids en un ou plusieurs métaux du groupe du platine, choisis dans le groupe formé par le ruthénium, le rhodium, le palladium, l'osmium, l'iridium et le platine, les métaux du groupe du platine se trouvant chacun dans au moins deux états d'énergie de liaison différents.

2. Procédé selon la revendication 1, caractérisé en ce que l'on utilise un catalyseur d'oxydation ayant une teneur de 0,01-20% en poids de palladium, le palladium se trouvant dans deux ou trois états d'énergie de liaison différents.

3. Procédé selon la revendication 1 ou 2, caractérisé en ce que l'on utilise un catalyseur d'oxydation ayant une teneur supplémentaire en un ou plusieurs éléments choisis dans le groupe formé par le fer, le cobalt, le nickel, le rhénium, l'argent et l'or.

4. Procédé selon l'une quelconque des revendications 1 à 3, caractérisé en ce que l'on utilise un catalyseur d'oxydation ayant un rapport molaire du titane et/ou du vanadium à la somme du silicium, du titane et/ou du vanadium s'élevant de 0,01:1 à 0,1:1.

5. Procédé selon l'une quelconque des revendications 1 à 4, caractérisé en ce que l'on utilise un catalyseur d'oxydation préparé par imprégnation ou réaction de silicalites de vanadium ou de titane à structure zéolithe, avec des solutions de sels, des complexes chélatés ou des complexes carbonylés des métaux du groupe du platine, suivie du réglage de la distribution requise des états d'énergie de liaison des métaux du groupe du platine par les conditions oxydantes ou réductrices adaptées.

6. Procédé selon la revendication 5, caractérisé en ce que l'on utilise un catalyseur d'oxydation préparé par imprégnation avec des solutions de sels de métaux du groupe du platine aux degrés d'oxydation +2 à +4, suivie d'une hydrogénation du catalyseur séché dans une atmosphère d'hydrogène à des températures de 20-120°C.

7. Procédé selon l'une quelconque des revendications 1 à 6, caractérisé en ce que l'on mène la réaction en présence d'eau.
